(19) Europäisches Patentamt
European Patent Office
Office européen des brevets

(11) Numéro de publication: **0 270 464**
**A1**

(12) # DEMANDE DE BREVET EUROPEEN

(21) Numéro de dépôt: **87402762.6**

(22) Date de dépôt: **04.12.87**

(51) Int. Cl.$^4$: **F 41 H 3/00**
C 09 K 11/06, G 01 S 17/88

(30) Priorité: **04.12.86 FR 8616976**

(43) Date de publication de la demande:
**08.06.88 Bulletin 88/23**

(84) Etats contractants désignés:
**CH DE GB IT LI SE**

(71) Demandeur: **Gravisse, Philippe**
**18 - 20, rue de Presles**
**F-75015 Paris (FR)**

(72) Inventeur: **Gravisse, Philippe**
**18-20 rue de Presles**
**F-75015 Paris (FR)**

**Schiffmann, Marc**
**Le Fromental Malataverne Massiny**
**F-69510 Thurins (FR)**

(74) Mandataire: **Bugnon-Hays, Claudine**
**PATCO S.A. 10, rue Vivienne**
**F-75002 Paris (FR)**

(54) **Procédé de contre-mesure dans le domaine de la désignation d'objectifs et de la télémétrie laser, matériaux et dispositifs pour la mise en oeuvre dudit procédé de contre-mesure.**

(57) Le procédé de contre-mesure dans le domaine de la désignation d'objectifs et de la télémétrie laser consiste à recouvrir une partie au moins d'un engin avec un matériau dopé absorbant au moins partiellement le faisceau laser incident et réémettant un rayonnement diffus dans une bande de longueur d'onde différente.

La longueur d'onde de réémission correspond avantageusement à une bande spectrale d'absorption de l'atmosphère. Une partie du signal de réémission peut servir au déclenchement d'une alarme.

La présente invention concerne également des matériaux pour la mise en oeuvre du procédé de contre-mesure, constitués d'une matrice dopée par des matières photoluminescentes.

Applications : vernis, peintures, verrières, visières de casque.

EP 0 270 464 A1

## Description

Procédé de contre-mesure dans le domaine de la désignation d'objectifs et de la télémétrie laser, matériaux et dispositifs pour la mise en oeuvre dudit procédé de contre-mesure.

La présente invention concerne un procédé de contre-mesure dans le domaine de la désignation d'objectif et de la télémétrie laser, ainsi que les matériaux pour la mise en oeuvre de ce procédé.

De nombreux systèmes d'armes utilisent le faisceau d'un laser, notamment du type YAG (Néodyme) d'une longueur d'onde de 1,06 micromètres, pour l'acquisition de la cible et de ses caractéristiques cinétiques. Le principe général consiste à diriger sur la cible, à l'aide d'un illuminateur, un faisceau laser de caractéristiques connues et à étudier les caractéristiques du rayonnement renvoyé par ladite cible.

Le faisceau laser de l'illuminateur peut être soit continu, soit pulsé. Le faisceau retour est étudié selon des techniques connues, telles qu'interférométrie, effet de doppler, mesure de décalage temporel de l'impulsion. Cette mesure permet de connaître la distance de la cible ainsi que, dans certains cas, la vitesse et la direction de déplacement.

Ces informations sont essentielles pour le guidage d'une arme telle qu'un missile.

L'illuminateur peut être embarqué sur le projectile ou être fixé sur un système d'arme transmettant des informations au projectile par ondes électromagnétiques ou par filoguidage. La cible peut être constituée par un véhicule terrestre, maritime ou aérien. On ne connaît, dans l'état de la technique, que peu de contre-mesure permettant de perturber la télémétrie laser. On utilise parfois des "leurres" destinés à renvoyer un signal non conforme aux caractéristiques de la cible. Toutefois, ce principe est difficile à mettre en oeuvre pour le rayonnement laser et ne présente qu'une efficacité très faible en raison des progrès dans le domaine de la discrimination des signaux permettant le rejet des informations jugées aberrantes par le système d'arme.

La demande de brevet français 85 09189 du présent demandeur proposait de perturber la transmission d'un rayonnement électromagnétique produit par une source dans une bande de longueur d'onde prédéterminée et destinée à être captée par un récepteur de détection des signaux, par interposition d'un écran absorbant au moins une partie du rayonnement émis dans la bande de longueur d'onde.

La présente invention a pour objet un procédé de contre-mesure permettant à un engin de diminuer sensiblement le rayonnement qu'il réémet lorsqu'il est éclairé par un illuminateur à faisceau laser, ainsi que les matériaux pour la mise en oeuvre dudit procédé.

Le procédé selon la présente invention consiste à recouvrir une partie au moins de l'engin avec un matériau absorbant au moins partiellement le rayonnement laser utilisé pour la télémesure ou la désignation d'objectif, et à le réémettre dans une bande de longueur d'onde différente de façon diffuse.

Ledit procédé consiste notamment à recouvrir une partie au moins de l'engin avec un matériau absorbant au moins partiellement le rayonnement d'une longueur d'onde de 1,06 micromètres, tel que celui habituellement émis par les illuminateurs à laser YAG, et à le réémettre sous forme d'un rayonnement diffus de longueur d'onde différente. Ce rayonnement de réémission n'est pas monochromatique, ni cohérent. L'énergie réémise pour une longueur d'onde de 1,06 micromètres est donc très fortement atténuée, et, de ce fait, le fonctionnement du télémètre laser sera profondément perturbé.

Selon une variante, la longueur d'onde d'absorbtion est fixée à 10,6 micromètres.

Selon un mode préféré, la longueur d'onde de réémission sera choisie de façon à correspondre à une bande spectrale d'absorption de l'atmosphère. L'atmosphère présente, en effet, au sol, un spectre de transmission comportant certains trous provenant des plages d'absorption de ses constituants, essentiellement le dioxyde de carbone, la vapeur d'eau, l'oxygène et l'ozone. Les principales bandes de longueurs d'onde d'absorption sont sensiblement égales à :

- 1,96 à 1.8 micromètres
- 1,45 à 1,3 micromètres
- 1,15 à 1,12 micromètres
- 0,96 à 0,93 micromètres
- 0,83 à 0,80 micromètres

0,76 à 0, 75 micromètres

Afin d'améliorer l'atténuation du rayonnement de réémission, il est donc avantageux de choisir une longueur d'onde de réémission dans l'une de ces bandes.

Selon une variante de la présente invention, on détecte une partie du rayonnement réémis en vue d'une alarme. La présence d'un rayonnement de réémission signifie que l'engin fait l'objet d'une télémétrie laser. Il est donc possible de détecter la présence dudit signal de réémission en vue d'alerter le pilote de l'engin, ou de modifier le comportement d'un engin automatique.

La présente invention concerne également les matériaux pour la mise en oeuvre du procédé de contre-mesure. Ce materiau est avantageusement constitué d'une matrice organique dopée par au moins une matière photoluminescente.

Selon un mode préféré de la présente invention, ladite matrice est constituée d'une résine dopée. Cette résine est déposée sur l'engin par enduction, sous forme de peinture ou de vernis. Le choix de la résine est fonction du type d'engin et de ses conditions d'utilisation. On pourra citer à titre d'exemple non limitatif des résines du type polyuréthane, acrylique, acétate de polyvinyle, silicone, résines formolurée, polyméthylacrylate de méthyl. Ces résines seront préférablement choisies ou traitées de façon à présenter une faible conductivité électrique pour diminuer la réponse du radar. Elles peuvent également être déposées sous forme d'un

film d'une épaisseur de quelques dixièmes de millimètres. Par ailleurs, la résine présentera les caractères de durabilité, de résistance et de présentation exigés par le milieu dans lequel évolue ledit engin : mer, air, eau, terre.

Le dopage peut être réalisé selon les techniques connues par dispersion dans la résine liquide des dopants photoluminescents ou par greffage. Il peut également être réalisé par introduction de particules dopées dans une matrice du type résine organique. Les particules dopées sont réalisées sous forme de fibres formant l'un des composants d'un matériau composite. Dans ce cas, le dopant photoluminescent est introduit en dispersion dans le matériau constitutif d'une fibre de verre, d'une fibre minérale ou d'une fibre organique.

Le dopant photoluminescent est du type présentant un pic d'absorption pour une longueur d'onde de 1,06 micromètres et un pic de réémission pour une longueur d'onde différente de 1,06 micromètres, et de préférence compris dans une zone spectrale d'absorption de l'atmosphère.

A titre d'exemple non limitatif, on peut citer des composants optiquement actifs du type :

- 4 (7 (2 phényl 4H-1-benzothiopyran-4-ylidène) 4 bromo-3-5-triméthylène-1,3,5-heptatriényl) 2 phényl-1-benzothiopyrylium perchlorate.
- 3-3'-diéthyl-9-11-15-17-dinéopenthylène thiopentacarbocyanin perchlorate.

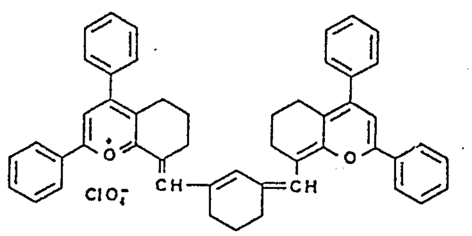

- Composés du type coronène graphite C24 H12, ou plus généralement des hydrocarbures aromatiques polycycliques.

Selon une variante de l'invention, on utilise plusieurs composants photoluminescents formant "cascade lumineuse". Le principe de la cascade lumineuse a fait l'objet de plusieurs brevets déposés par le demandeur.

L'un des composés photoluminescents dont la bande de réémission se situe en amont confère au matériau une bonne transmission dans le spectre visible et limite les reflets visibles, et l'autre dont la bande de réémission se situe en aval de la bande de réémission du composé photoluminescent principal permet d'adapter la bande de longueur d'onde de réémission à la sensibilité spectrale d'un photodétecteur ou à une bande de faible transmission lumineuse de l'atmosphère.

Selon un mode de réalisation particulier, on dispose en au moins un endroit de l'engin un détecteur photosensible à la bande de réémission dudit revêtement.

Lorsque l'engin est soumis à un faisceau laser, le rayonnement I.R. est réémis par le vernis de façon diffuse, notamment en direction du détecteur photosensible. La détection d'un rayonnement de réémission permet de constituer une alarme. Cette détection sera réalisée en plusieurs points de l'engin, de façon à compléter l'alarme par un indicateur de la direction de l'illuminateur laser.

Selon un autre mode de réalisation particulier de la présente invention, le matérieau dopé forme une verrière rigide transparente dans le spectre visible. Une telle verrière est notamment destinée à un aéronef ou à un hélicoptère. Le matériau constituant la verrière est composé d'une matrice du type polyméthylacrylate de méthyl (PMMA), d'une résine epoxy, alkyd, de copolymères furaniques ou d'écopolymères de type connu.

Selon un mode de réalisation préféré, ladite verrière est divisée en secteurs d'identification de la direction de l'illuminateur laser. Dans le case d'une bulle d'hélicoptère, lesdits secteurs peuvent être, par exemple, au nombre de trois, la normale au premier secteur étant orientée vers l'avant de l'hélicoptère, la normale aux deux autres secteurs respectivement vers la droite et vers la gauche de l'engin. A chacun de ces secteurs, on associe au moins un détecteur photosensible. Lorsque'un rayonnement laser de longueur d'onde de 1,06 micromètres est dirigé sur l'engin, il est absorbé par le matériau photoluminescent de l'un des secteurs et réémis sous forme d'un rayonnement diffus de longueur d'onde différente. Ce rayonnement réémis est détecté par un photodétecteur sensible dans la bande de longueur d'onde de réémission. L'identification du secteur d'incidence du rayonnement permet de donner une indication sur l'origine du rayonnement de télémesure, et donc de l'emplacement de l'illuminateur. La détection d'un rayonnement de réémission peut donner lieu à une alarme sonore ou visuelle. Le photodétecteur peut être choisi du type à jonction et peut être muni d'un filtre à faible bande passante centrée sur la longueurs d'onde de réémission du matériau.

Le photodétecteur est suivi d'une chaîne de traitement électronique permettant d'éliminer le bruit de fond. Ladite chaîne de traitement peut comporter notamment un détecteur de front permettant de signaler l'incidence d'une impulsion laser, ainsi qu'un système d'asservissement permettant d'éliminer les effets de variation de l'éclairage ambiant. Ce système d'asservissement peut être réalisé de façon simple par un pont de WHEASTON comportant dans l'une des branches un photodétecteur à jonction muni d'un filtre dont la bande passante est centrée sur la longueur d'onde de réémission, et dans l'autre branche un photodétecteur de même nature comportant un autre filtre éliminant la bande de longueur d'onde de réémission.

Outre une alarme sonore, l'alarme peut être complétée par un indicateur de menaces par secteurs ou un système de synthése vocale.

Le nombre et la forme des secteurs dépendant de la géométrie de la verrière.

Selon une variante, ladite verrière constitue un volume de détection. Ce volume de détection peut être réalisé sous forme d'une demi sphère disposée sur les côtés d'un engin, ou sous le ventre d'un aéronef. Ladite demi sphère de détection comporte

des secteurs d'identification constitués d'un matériau dopé munis chacun d'au moins un photodétecteur.

Selon une variante, le matériau transparent rigide dopé constitue une visière de casque. Outre son rôle de contre-mesure et d'alarme lorsque ladite visière est pouvue d'un photodétecteur, elle évite des éblouissements ou des brûlures de la rétine du pilote grâce à la conversion du faisceau laser incident en un rayonnement présentant une diffusion spectrale et spatiale importante.

D'autres exemples et modes de réalisation ressortiront mieux de la description qui va suivre en s'appuyant sur les figures suivantes où :

- la figure 1 représente une vue schématique d'une partie d'un engin traité selon le procédé de l'invention,
- la figure 2 représente la vue schématique d'un hélicoptère portant une bulle selon l'invention,
- la figure 3 représente une vue schématique d'une verrière comportant une série de photodétecteurs en vue de la réalisation d'une alarme,
- la figure 4 représente un schéma synoptique d'un système d'alerte.

Le matériau dopé (1) est déposé sur une partie au moins de la surface extérieure (2) d'un engin, sous forme d'une pellicule de quelques dixièmes de millimètres d'épaisseur. Ce dépôt peut être réalisé par toutes les techniques connues, et notamment sous forme de peinture, de vernis ou de film adhésif.

Il est constitué d'une résine dopée par des composés photoluminescents introduits par mélange, greffage ou dispersion. Le matériau dopé (1) est optiquement actif. Il absorbe le faisceau incident (3), provenant par exemple d'un illuminateur laser. Ce faisceau de longueur d'onde de 1,06 micromètres est absorbé par le matériau dopé (1) et est réémis sous forme d'un rayonnement diffus (4). Cette diffusion est à la fois spatiale et spectrale, la bande spectrale de réémission du matériau dopé (1) excité par un rayonnement incident de longueur d'onde déterminée se présentant sous forme d'un pic relativement étroit centré sur une longueur d'onde différente de 1,06 micromètres. On peut, en outre, obtenir une diffusion temporelle en choisissant un matériau dopé à rémanence. Cette rémanence peut provenir de la matière photoluminescente elle-même ou être obtenu par addition d'une autre matière photoluminescente à forte rémanence.

Pour obtenir un décalage plus important de la longueur d'onde de réémission par rapport à la longueur d'onde du faisceau laser incident, on peut introduire une ou plusieurs autres matières photoluminescentes de façon à former une cascade lumineuse. Dans ce cas, la première matière photoluminescente est choisie de façon à absorber les rayonnements de 1,06 micromètres, et à réémettre un rayonnement d'une première longueur d'onde déterminée, et la deuxième matière photoluminescente est choisie de façon à absorber un rayonnement de ladite première longueur d'onde déterminée et à réémettre un rayonnement d'une autre longueur d'onde. Les cascades lumineuses ont fait l'objet de plusieurs brevets déposés par le demandeur.

Suivant le type de matrice et le type de matières photoluminescentes, la concentration en volume des matières photoluminescentes est comprise entre 0,0001 % à 0,01 %.

Selon une variante, le matériau dopé forme des particules pouvant être introduites dans un des constituants des surfaces extérieures de l'engin. Elles peuvent présenter la forme de fibres destinées à la réalisation de matériaux composites, ou de paillettes de formes diverses destinées à être introduites dans un vernis.

La matrice sera constituée de résines du type :

- polyuréthane,
- acrylique,
- silicone,
- ethyl vinyl acétate (EVA),
- polyméthylacrylate de méthyl,
- résine formol-urée,
- copolymères acrylovinyliques,
- copolymères polyéthylène,
- copolymères polyéthylène-polystyrène,
- copolymères polyméthylacrylate de méthyl-EVA-polystyrène,
- copolymères acrylovinyliques,
- copolymères polyéthylène-EVA,
- copolymères acrylique EVA.

Selon une autre forme de réalisation, le matériau constitue une verrière transparente. La matrice est avantageusement constituée de polyméthylacrylate de méthyl.

La figure 2 représente schématiquement un hélicoptère pourvu d'une verrière du type de l'invention. La verrière (5) est transparente, et peut être divisée en plusieurs secteurs (6), (7), (8), (9), (10) et (11). Les différents secteurs sont reliés entre eux par une armature rigide de type connu.

Selon un mode préféré de réalisation, chaque secteur est pourvu de détecteurs photosensibles (12) disposés sur les bords. Le rayonnement de réémission est transmis auxdits photodétecteurs (12) par un effet de guide d'onde. Lorsqu'un faisceau incident (13) est dirigé sur l'engin, il est intercepté par l'un des secteurs. Ledit faisceau incident (13) est absorbé par le matériau dopé du secteur et est réémis sous forme d'un rayonnement diffus de longueur d'onde différente, qui est détecté par les détecteurs photosensibles (12) disposés le long dudit secteur. Les détecteurs photosensibles (12) sont des photodétecteurs de type connu, et sont constitués de photodétecteurs à jonction. Les photodétecteurs (12) sont munis d'un filtre à bande passante étroite destiné à éliminer tous les rayonnements autres que ceux correspondant à la longueur d'onde de réémission, afin de diminuer le bruit de fond. La mesure se fera par un circuit amplificateur de type connu. Toutefois, il est possible de diminuer encore le bruit de fond provenant essentiellement des parties chaudes de l'engin, tels les moteurs, turbines, systèmes électroniques embarqués, ou de l'échauffement de l'air sur le fuselage d'un aéronef.

Pour cela, on dispose sur le bord de chaque secteur au moins un autre photodétecteur (14) dont la sensibilité spectrale est différente. Son rôle est d'annuler les variations dues à des modifications de

luminosité ambiante. Les détecteurs photosensibles (12) et (14) peuvent être montés dans deux branches d'un pont du type pont de WHEASTON. Ledit pont est suivi d'une chaîne de traitement comportant notamment un discriminateur, un détecteur de front, et un indicateur visuel ou sonore. L'indicateur visuel peut être réalisé sous la forme d'une série de voyants lumineux du type diodes électroluminescentes indiquant sur une représentation schématique de l'engin, le secteur illuminé par un faisceau incident provenant d'un illuminateur laser. Cet indicateur visuel peut être complété par une alarme sonore ou une alarme à synthèse vocale.

Selon une variante, le matériau transparent comportant une série de photodétecteurs réalise une visière de casque. Outre les fonctions déjà explicitées, cette visière absorbe le rayonnement laser et évite au pilote un éblouissement ou une lésion de la cornée.

Selon un exemple de réalisation de matériau dopé formant une semi sphère de détection, par example une demi sphère, en vue de la mise en oeuvre du procédé selon la présente invention, la demandeur a réalisé une semi sphère en matériau composite recouverte d'un vernis constitué d'une matrice PMMA dopée par un composant optiquement actif du type 4 (7 (2 phényl 4H-1-benzothiopyran-4-ylidène) 4 bromo-3-5-triméthylène 1-3-5-heptatriényl) 2 phényl-1-benzothiopyrylium, selon une concentration de 10 % en volume. Le matériau ainsi réalisé présente une bande d'absorption centrée sur une longueur d'onde de 1,06 micromètres et une bande de réémission dont le maximum est compris entre 1,12 et 1,15 micromètres.

La semi sphère, d'un diamètre de 15 cm environ, est divisée en quatre secteurs égaux. Chacun de ces secteurs comporte deux photodétecteurs (12) dont la sensibilité est maximale pour une longueur d'onde comprise entre 1,12 et 1,15 micromètres. Ces photodétecteurs sont reliés à des circuits de traitement de signaux (15) destinées à éliminer les bruits de fond et les signaux parasites. Un circuit de détention de signal I.R. et de mise en forme de signal(16) analyse les signaux correspondant à chacun des secteurs et les mémorise sous forme numérique grâce à un circuit mémoire (17).

Les informations ainsi stockées sont analysées par un circuit analyseur de la direction de la menace (18) et un circuit analysqur "en rapprochement ou en éloignement" (19), puis transmis au pilote sous forme visuelle à l'aide d'un indicateur visuel (20) fixé sur le tableau de bord, ou introduit dans le calculateur de bord, ainsi que sous forme vocale par une alarme vocale (21).

Selon un autre exemple de réalisation, on réalise un vernis par dispersion d'un coronène dans une matrice du type EVA, la concentration du coronène étant de 10 exp -3.

Bien entendu, l'invention n'est pas limitée aux modes de réalisation décrits ici. On peut apporter des modifications sans pour cela sortir du cadre de l'invention. Les effets selon l'invention, peuvent, par exemple, être combinés avec les effets des matières absorbantes connues ne comprenant pas de matières de dopage photoluminescentes.

**Revendications**

1) Procédé de contre-mesure dans le domaine de la désignation d'objectif et de la télémétrie laser, caractérisé en ce que l'on recouvre une partie au moins d'un engin avec un matériau dopé (1) absorbant au moins partiellement un rayonnement laser incident (3) d'une longueur d'onde déterminée, et réémettant un rayonnement diffus dans une bande de longueur d'onde ne comprenant pas ladite longueur d'onde déterminée.

2) Procédé de contre-mesure dans le domaine de la désignation d'objectif et de la télémétrie laser selon la revendication 1, caractérisé en ce que ledit matériau dopé (1) réémet un rayonnement diffus dans une bande spectrale d'absorption de l'atmosphère.

3) Procédé de contre-mesure dans le domaine de la désignation d'objectif et de la télémétrie laser selon l'une quelconque des revendications 1 ou 2, caractérisé en ce que l'on détecte une partie du rayonnement réémis en vue du déclenchement d'une alarme.

4) Procédé de contre-mesure dans le domaine de la désignation d'objectif et de la télémétrie laser selon l'une quelconque des revendications 1 à 3, caracterisé en ce que l'on recouvre au moins une partie d'un engin avec un matériau dopé (1) absorbant au moins partiellement un rayonnement laser incident (3) de longueur d'onde de 1,06 micromètres et réémettant un rayonnement diffus dans une bande spectrale d'absorption de l'atmosphère ne comprenant pas la longueur d'onde de 1,06 micromètres.

5) Procédé de contre-mesure dans le domaine de la désignation d'objectif et de la télémétrie laser selon l'une quelconque des revendications 1 à 3, caractérisé en ce que l'on recouvre au moins une partie d'un engin avec un matériau dopé (1) absorbant au moins partiellement un rayonnement laser incident (3) de longueur d'onde de 10,6 micromètres et réémettant un rayonnement diffus dans une bande spectrale d'absorption de l'atmosphère ne comprenant pas la longueur d'onde de 10,6 micromètres.

6) Matériau dopé (1) pour la mise en oeuvre du procédé selon l'une quelconque des revendications 1 à 5, caractérisé en ce qu'il est constitué d'une matrice organique dopée par au moins une matière photoluminescente.

7) Matériau dopé (1) selon la revendication 6, caractérisé en ce que les matières photoluminescentes forment une cascade lumineuse.

8) Matériau dopé (1) selon la revendication 6, caractérisé en ce que la matière photoluminescente est constituée par du 4(7(2 phényl 4H-1-benzothiopyran-4-ylidène) 4 bromo-3-5-triméthylène-1-3-5-heptatriènyl) 2 phényl-1-benzothiopyrylium perchlorate.

9) Matériau dopé (1) selon la revendication 6, caractérisé en ce que la matière photoluminescente est constituée par du 3-3'-diéthyl--9-11-15-17-dinéopenthylène thiopentacarbocyanin perchlorate.

10) Matériau dopé (1) selon l'une quelconque des revendications 6 à 9, caractérisé en ce qu'il est appliqué sur la surface extérieure (2) dudit engin sous la forme d'une peinture ou d'un vernis.

11) Matériau dopé (1) selon l'une quelconque des revendications 6 à 9, caractérisé en ce qu'il forme des particules destinées à être intégrées dans le constituant d'au moins une partie de la surface extérieure de l'engin.

12) Matériau dopé (1) selon l'une quelconque des revendications 6 à 9, caractérisé en ce qu'il forme une verrière (5) transparente dans le spectre visible.

13) Matériau dopé (1) selon l'une quelconque des revendications 6 à 12, caractérisé en ce qu'ill est divisé en secteurs (6), (7), (8), (9), (10) et (11), chaque secteur comportant au moins un détecteur photosensible dont la plage de sensibilité comprend la bande de longueur d'onde de réémission dudit matériau dopé, ledit détecteur photosensible délivrant un signal d'alarme.

14) Matériau dopé (1) selon la revendication 13, caractérisé en ce que les secteurs comportent en outre au moins un détecteur photosensible (12), dont la plage de sensibilité ne comprend pas la longueur d'onde de réémission.

15) Matériau dopé (1) selon l'une quelconque des revendications 13 à 14, caractérisé en ce qu'il constitue une semi sphère de détection destinée à être placée sur une partie extérieure de l'engin.

16) Matériau dopé (1) selon l'une quelconque des revendications, 13 à 14, caractérisé en ce quil forme une visière de casque.

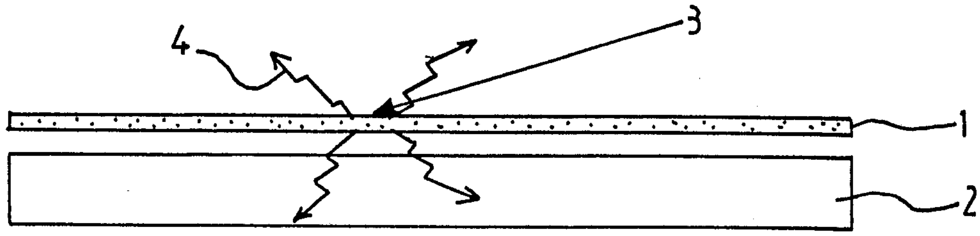


FIG.1

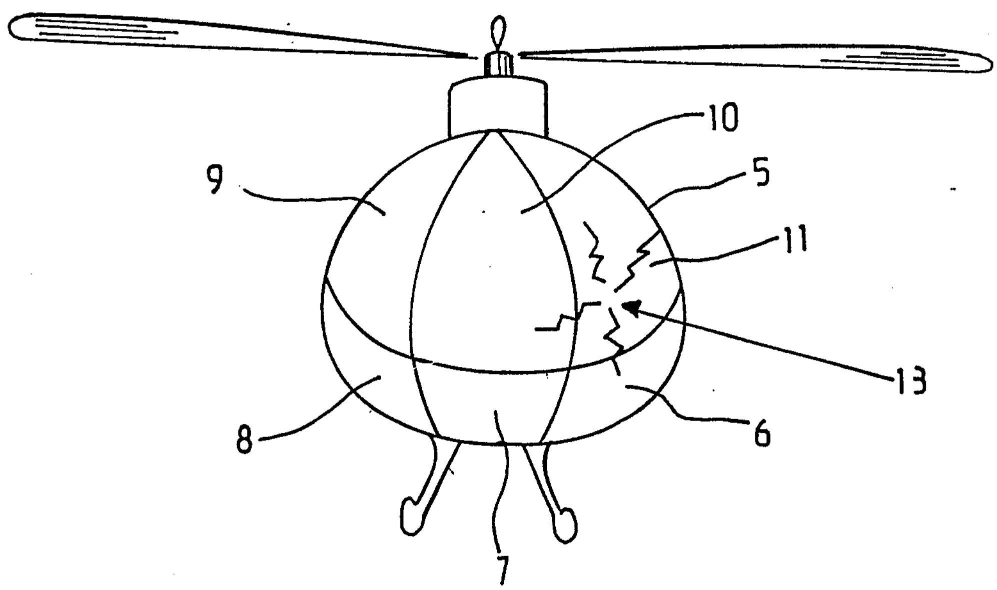


FIG.2

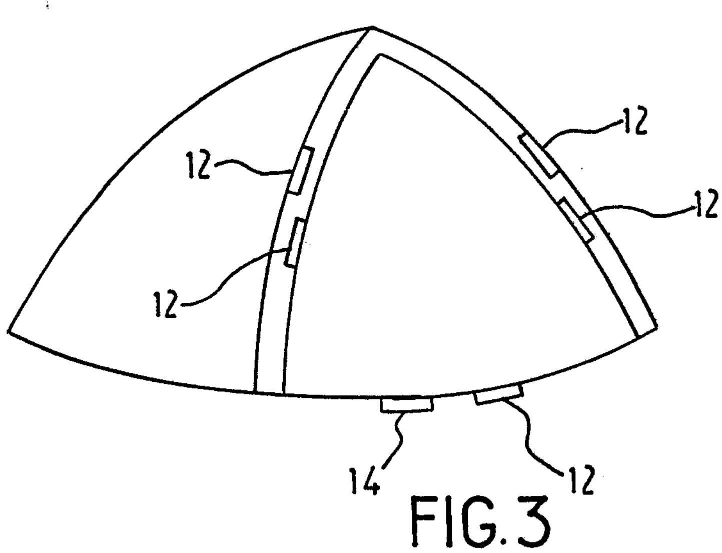


FIG.3

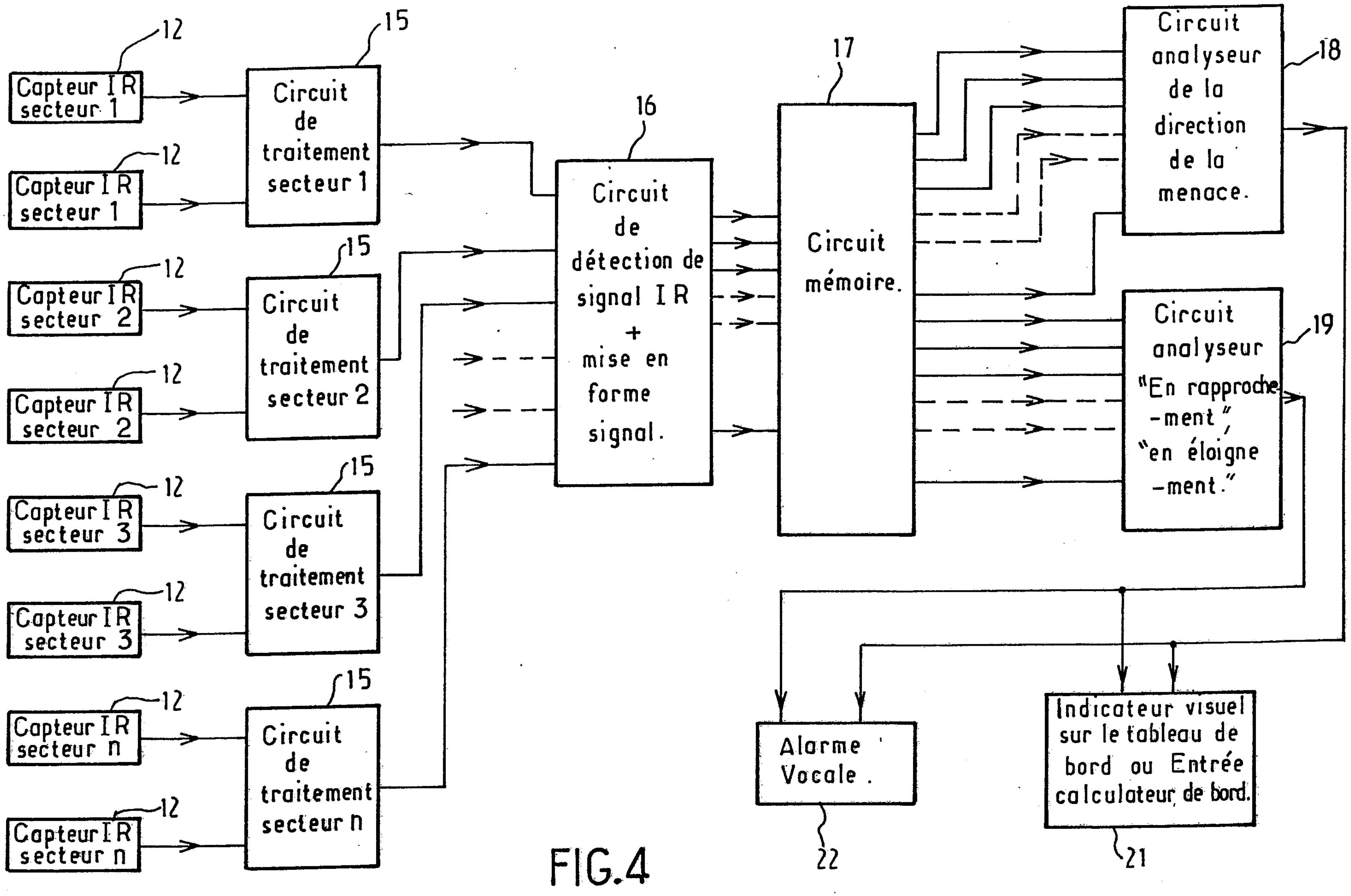
12
Capteur IR secteur 1
12
Capteur IR secteur 1
12
Capteur IR secteur 2
12
Capteur IR secteur 2
12
Capteur IR secteur 3
12
Capteur IR secteur 3
12
Capteur IR secteur n
12
Capteur IR secteur n
15
Circuit de traitement secteur 1
15
Circuit de traitement secteur 2
15
Circuit de traitement secteur 3
15
Circuit de traitement secteur n
16
Circuit de détection de signal IR + mise en forme signal.
17
Circuit mémoire.
18
Circuit analyseur de la direction de la menace.
19
Circuit analyseur "En rapproche-ment", "en éloigne-ment."
Alarme Vocale.
22
Indicateur visuel sur le tableau de bord ou Entrée calculateur de bord.
21

FIG.4

Office européen des brevets

# RAPPORT DE RECHERCHE EUROPEENNE

Numero de la demande

EP 87 40 2762

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 398 281 (CONTINENTAL GUMMI-WERKE AG)<br>* En entier * | 1 | F 41 H 3/00<br>C 09 K 11/06<br>G 01 S 17/88 |
| A | DE-A-3 413 372 (W. RUHRMANN)<br>* Revendication 1 * | 1,3 | |
| A | WO-A-8 606 844 (PRECITRONIC GESELLSCHAFT FÜR FEINMECHANIK UND ELECTRONIC mbH)<br>* Page 3, dernier alinéa; revendications 1,18 * | 1,3 | |
| A | US-A-3 986 690 (W. MILLING) | | |
| A | US-A-3 992 628 (L. KARNEY) | | |
| | | | **DOMAINES TECHNIQUES RECHERCHES (Int. Cl.4)**<br>F 14 H<br>F 41 J<br>B 64 D<br>G 01 S<br>B 63 G<br>B 64 C |

Le présent rapport a été établi pour toutes les revendications

| Lieu de la recherche | Date d'achèvement de la recherche | Examinateur |
|---|---|---|
| LA HAYE | 05-02-1988 | VAN DEN BULCKE E. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)